**Europäisches Patentamt**

**European Patent Office**

**Office européen des brevets**

(19)

(11) Veröffentlichungsnummer: **0 094 719**
**B1**

(12) # EUROPÄISCHE PATENTSCHRIFT

(45) Veröffentlichungstag der Patentschrift:
**31.08.88**

(21) Anmeldenummer: **83200666.2**

(22) Anmeldetag: **09.05.83**

(51) Int. Cl.⁴: **G 06 K 15/12**, G 06 K 15/16

(54) **Verfahren zur Kompensation von Gleichlaufschwankungen im Vortrieb des Aufzeichnungsträgers bei nicht-mechanischen Matrixdruckern.**

(30) Priorität: **14.05.82 DE 3218120**

(43) Veröffentlichungstag der Anmeldung:
**23.11.83 Patentblatt 83/47**

(45) Bekanntmachung des Hinweises auf die Patenterteilung:
**31.08.88 Patentblatt 88/35**

(84) Benannte Vertragsstaaten:
**DE FR GB IT SE**

(56) Entgegenhaltungen:
**DE-A-3 111 365**
**DE-B-1 255 962**
**US-A-3 174 415**
**US-A-4 039 746**

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB IT SE**

(72) Erfinder: **Conrads, Norbert, Rolandstrasse 99a, D-5120 Herzogenrath (DE)**
Erfinder: **Schiebel, Ulrich, Zehntweg 60, D-5100 Aachen (DE)**
Erfinder: **Kirchhoff, Rolf, Gladiolenweg 11, D-5242 Frensburg (DE)**

(74) Vertreter: **Hartmann, Heinrich, Dipl.- Ing., Philips Patentverwaltung GmbH Wendenstrasse 35 Postfach 10 51 49, D-2000 Hamburg 1 (DE)**

EP 0 094 719 B1

LIBER, STOCKHOLM 1988

## Beschreibung

Die Erfindung bezieht sich auf ein Verfahren zur Kompensation von durch Gleichschwankungen des Vortriebs eines Aufzeichnungsträgers verursachten Ungleichmäßigkeiten der Zeilenabstände bei nichtmechanischen Matrixdruckern, insbesondere bei elektrophotographischen Druckern, bei denen eine Schreibzeile durch eine Mehrzahl von nacheinander in bestimmten Rasterzeilenabständen mit konstanter Rasterzeilenfrequenz mittels eines horizontal abgelenkten Schreibstrahls aufgezeichnete Rasterzeilen gebildet wird, wobei aus dem Unterschied zwischen der Vortriebsgeschwindigkeit (Ist-Wert) des Aufzeichnungsträgers und dessen vorbestimmter Vortriebsgeschwindigkeit (Soll-Wert) eine Regelgröße gewonnen wird und beim Erreichen einer Regelgröße, welche etwa der negativen oder positiven Abweichung um einen Rasterzeilenabstand entspricht, eine zusätzliche informationslose Rasterzeile veranlaßt wird.

Bei nichtmechanischen Druckern (Non-Impact-Drucker) erfolgt die Aufzeichnung einer Schreibzeile nicht durch direkte Druckberührung der Schreibelemente mit dem Aufzeichnungsträger, sondern durch Aufspritzen (z. B. Tintenstrahldrucker) oder durch Bildung eines latenten Bildes (elektrostatischer und elektrophotographischer Drucker), das anschließend entwickelt und fixiert werden muß. Dabei können die Zeichen einer Schreibzeile auf verschiedene Art erstellt werden. Wird beispielsweise ein einzelnes Zeichen aus 5x7 Rasterpunkten aufgebaut, so ist es möglich, 5x7 Schreibelemente vorzusehen und individuell anzusteuern. In diesem Falle wird das Zeichen insgesamt aufgebaut. Es ist auch möglich, nur fünf Schreibelemente übereinander anzuordnen und diese sieben Schritte ausführen zu lassen, um das einzelne Zeichen zu erstellen. In diesen beiden Fällen wird eine Schreibzeile Zeichen für Zeichen geschrieben. Eine dritte Möglichkeit besteht darin, nur ein einziges Schreibelement oder eine Reihe von nebeneinanderliegenden Schreibelementen vorzusehen, so daß dann zur Bildung der Zeichen einer Schreibzeile die erforderlichen Rasterpunkte einer Rasterzeile nacheinander oder gleichzeitig und fünf Rasterzeilen nacheinander ausgeführt werden. Diese Möglichkeit wird vorzugsweise bei Zeilendruckern angewendet. Insbesondere wird diese Methode bei elektrostatischen und elektrophotographischen Druckern und Tintenstrahldruckern verwendet. Bei elektrostatischen Druckern werden zweckmäßig so viele Elektroden nebeneinander vorgesehen wie Rasterpunkte in einer Rasterzeile möglich sind. Durch Fortbewegung des Aufzeichnungsträgers werden dann nacheinander die erforderlichen Rasterzeilen aufgezeichnet. Bei elektrophotographischen Druckern wird statt der Vielzahl von Elektroden ein einzelner Schreibstrahl verwendet, der innerhalb einer Rasterzeile horizontal von Rasterpunkt zu Rasterpunkt ausgelenkt wird, wobei der gleiche Inhalt einer Rasterzeile auch mehrmals aufgezeichnet werden kann. Eine Rasterzeile besteht dann aus mehreren Teilrasterzeilen.

Die Erfindung bezieht sich auf derartige Drucker, bei denen die Schreibzeilen Rasterzeile für Rasterzeile aufgezeichnet werden. Die Schreibgeschwindigkeit für eine Schreibzeile hängt dabei von der Vortriebsgeschwindigkeit des Aufzeichnungsträgers und von der Ansteuerungsgeschwindigkeit der Schreibelemente beim elektrostatischen Drucker bzw. von der Ablenkgeschwindigkeit (Zeilenfrequenz) beim elektrophotographischen Drucker ab. Das Schriftfeld selbst hängt im wesentlichen vom Abstand der Rasterpunkte voneinander ab. Je mehr sich diese überlappen, desto besser wird das Schriftbild. Eine Überlappung der Rasterpunkte innerhalb der Rasterzeile kann bei elektrostatischen Druckern dadurch erreicht werden, daß die Elektroden konstruktiv in mehreren Elektrodenreihen angeordnet werden, die versetzt zueinander liegen. Bei elektrooptischen Druckern wird eine Rasterzeile durch horizontale Auslenkung des Schreibstrahles erreicht. Die Gesamtauslenkung entspricht dabei der möglichen Schreibbreite einer Schreibzeile. Die Überlappung der Rasterpunkte in vertikaler Richtung bereitet keine Schwierigkeiten, da hierbei der Rasterzeilenabstand frei gewählt werden kann und von der Vortriebsgeschwindigkeit des Aufzeichnungsträgers abhängt. So kann eine Schreibzeile ohne weiteres aus 10 bis 100 Rasterzeilen aufgebaut werden. Üblicherweise beträgt der Rasterzeilenabstand 0,05 bis 0,2 mm. Dadurch wird ein Schriftbild erzielt, das dem Gedruckten weitgehend gleich ist.

Ein wesentlicher Faktor für ein solches Schriftbild ist aber auch, daß die festgelegten Rasterzeilenabstände über große Zeiträume möglichst konstant gehalten werden. Während ein zeitlicher Gleichlauf in der Aufzeichnung der Rasterzeilen durch die elektronische Ansteuerung der Schreibelemente bzw. durch die Zeilenfrequenz des Schreibstrahles ohne weiteres erreicht werden kann, ergeben sich im Vortrieb des Aufzeichnungsträgers Schwierigkeiten, die überwiegend in den Antriebselementen, z. B. Getriebe, Übersetzungen, Motor, bedingt sind.

Bei der Aufzeichnung einer einzelnen Schreibzeile können Gleichlaufschwankungen in der Vortriebsgeschwindigkeit des Aufzeichnungsträgers noch toleriert werden, wenn sie einige Prozent nicht überschreiten. Bei der Beschriftung großer Papierstücke, z. B. DIN A4, mit einer Vielzahl von Schreibzeilen aber müssen die Gleichlaufschwankungen wesentlich enger toleriert werden, da sich Fehler in der Placierung der Rasterzeilen, die sich durch eine leicht veränderte Vortriebsgeschwindigkeit ergeben, über die gesamte Papierlänge akkumulieren können. Aus diesem Grunde sollte bei diesen Langzeitschwankungen die Zulässigkeit bei ± 0,2 bis 0,5 % liegen. Dies aber ist nur mit erheblichem Aufwand im Antrieb des Aufzeichnungsträgers zu erfüllen, z. B. durch genau geregelte Motoren. Die preisgünstigen Asynchronmotoren erreichen eine Vortriebskonstanz von einigen Prozent, wenn dabei Netzspannungsschwankungen und verschiedene Betriebsmodi der Maschine, wie Einzeldruck oder kontinuierlicher Druck, berücksichtigt werden.

Ein Verfahren der eingangs genannten Art ist durch die DE-A-3 111 365 bekannt. Dabei werden, je nach dem, ob der Vortrieb des Aufzeichnungsträgers zu schnell oder zu langsam ist, eine zusätzliche informationslose Rasterzeile veranlaßt oder eine Rasterzeile doppelt geschrieben.

Demgegenüber liegt der Erfindung die Aufgabe zugrunde, das bekannte Verfahren derart zu gestalten, daß eine Verringerung des Steueraufwands für Korrekturmaßnahmen möglich ist.

Diese Aufgabe wird dadurch gelöst, daß der Schreibstrahl nach der Aufzeichnung einer Rasterzeile auch vertikal um einen Korrekturwert ausgelenkt wird und daß, wenn die Summe dieser vertikalen Korrektur-Auslenkungen den Wert des Rasterzeilenabstandes erreicht, die Aufzeichnung der nachfolgenden Rasterzeile um eine Ablenkperiode des Schreibstrahls ausgesetzt und die vertikale Auslenkung des Schreibstrahls auf den Ausgangswert zurückgesetzt wird.

Unter vorbestimmter Vortriebsgeschwindigkeit ist diejenige Geschwindigkeit des Aufzeichnungsträgers zu verstehen, bei der die Ansteuerung der Schreibelemente bzw. des Schreibstrahles die Aufzeichnung einer jeden Rasterzeile exakt immer dem gleichen Schreibbereich bewirkt.

Dabei wird davon ausgegangen, daß Schaltungen zum Soll-Ist-Vergleich und einer daraus abgeleiteten Regelgröße an sich bekannt sind. Weiterhin wird der konstruktive Aufbau eines elektrostatischen bzw. elektrophotographischen Druckers als bekannt vorausgesetzt, z. B. aus der DE-A-2 023 719 und DE-A-3 108 115.

Dabei wird die Ablenkfrequenz so gewählt, daß sie stets größer oder gleich ist der durch die Trommelvortriebsgeschwindigkeit und den gegebenen Rasterzeilenabstand bestimmten Rasterzeilenfrequenz. Beträgt beispielsweise der festgelegte, aber frei bestimmbare Rasterzeilenabstand 0,08 mm, so kann die vertikale Ablenkung pro Rasterzeile ein bis zwei Zehnerpotenzen kleiner sein.

Ein solches Verfahren zur Steuerung des Gleichlaufes hat den Vorteil, daß die dazu erforderliche Schaltung einfach gestaltet werden kann, da die vertikale Ablenkung des Schreibstrahles nur in einer Richtung, nämlich entgegen gesetzt der Vortriebsrichtung des Aufzeichnungsträgers, erfolgt.

In einem komfortablen Zeichensatz gibt es Sonderzeichen, die sich über die gesamte Zeilenhöhe erstrecken. Bestehen diese überwiegend aus durchgehenden vertikalen Strukturen, so ergeben sich beim Weglassen von Rasterzeilen keine Probleme.

Bei sogenannten "Logotypen", das sind Minigrafiken (z. B. Firmenzeichen), die sich über mehrere Schreibzeilen erstrecken, kann es vorkommen, daß je nach Gestaltung der Zeichenstruktur die Korrektur sichtbar wird und dadurch das Zeichen nicht die gewünschte Struktur aufweist. Für diesen Fall kann vorgesehen werden, daß in den entsprechenden Zeichenzeilen die Korrektur ausgesetzt wird.

Die Erfindung wird im folgenden anhand zweier Ausführungsbeispiele näher erläutert. Es zeigen:

Fig. 1    den prinzipiellen Aufbau eines photoelektrischen Druckers

Fig. 2    einen stark vergrößerten Ausschnitt des Schreibbereiches des Aufzeichnungsträgers nach Fig. 1,

Fig. 3    die Schaltungsanordnung für ein Ausführungsbeispiel nach der Erfindung,

Fig. 4    das Frequenzdiagramm der Schaltungsanordnung nach Fig. 3

Fig. 5    eine Schaltungsanordnung eines weiteren Ausführungsbeispieles der Erfindung und

Fig. 6    das Flußdiagramm zur Ansteuerung der Schaltungsanordnung nach Figur 4.

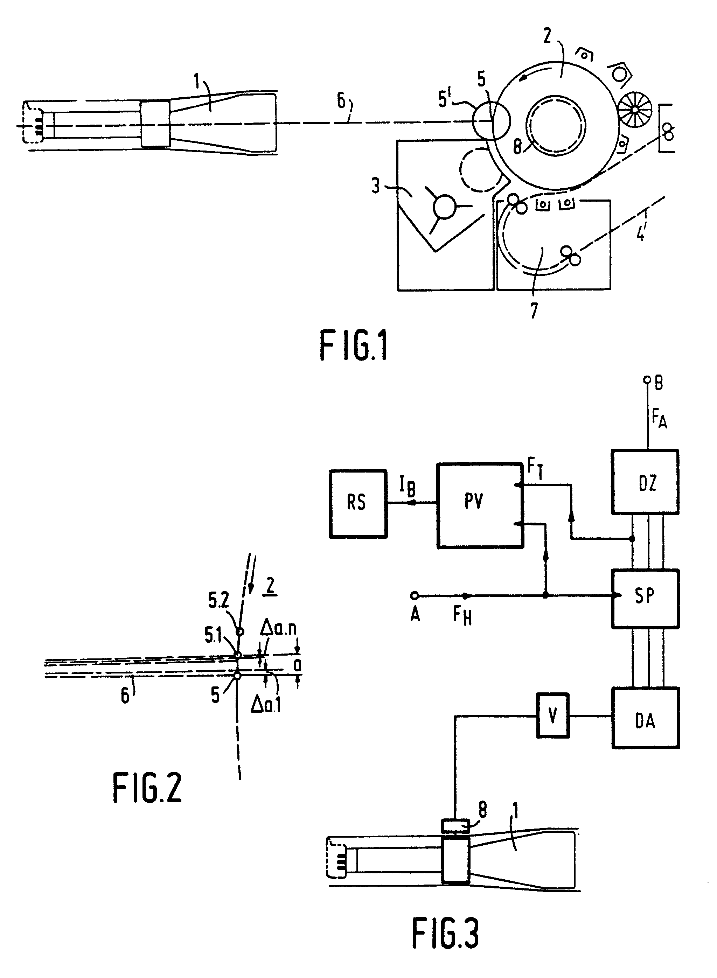

In Figur 1 ist ein elektrophotographischer Mosaikdrucker im prinzipiellen Aufbau dargestellt. Von einer Elektronenstrahlröhre 1 wird ein Schreibstrahl 6 auf einen Aufzeichnungsträger ausgestrahlt, der an der Auftreffstelle einen Rasterpunkt latent aufzeichnet. Der Schreibstrahl 6 wird von der Elektronenstrahlröhre 1 senkrecht zur Zeichenebene ausgelenkt. Mit jeder Auslenkung wird entsprechend der gespeicherten Information ein Rasterpunkt erzeugt, so daß eine Rasterzeile 5 aufgezeichnet wird. Anstelle der Elektronenstrahlröhre 1 kann auch ein Laser verwendet werden. Auch ist es möglich, anstelle der Elektronenstrahlröhre eine Elektrodenanordnung im Bereich der Rasterzeile 5 vor dem Aufzeichnungsträger 2 anzuordnen, die dann über die gesamte Rasterzeilenbreite reicht und die Rasterzeile elektrostatisch aufzeichnet.

Im vorliegenden Beispiel ist der Aufzeichnungsträger 2 als Schreibtrommel ausgebildet, die sich um ihre Achse in Pfeilrichtung dreht. Mit dieser Achse ist in bekannter Weise eine Schlitzscheibe 8 gekoppelt, die in Verbindung mit einer Lichtquelle und einer Photodiode eine Impulsfolge erzeugt, die der tatsächlichen Vortriebsgeschwindigkeit der Schreibtrommel 2 entspricht. Das vom Schreibstrahl 6 oder den Elektroden erzeugte latente Rasterbild wird in der Entwicklerstation 3 entwickelt und in der Übertragungsstation 7 auf ein Papierblatt oder einen Papierstreifen 4 übertragen. Nach anschließender Löschung des Rasterbildes auf der Schreibtrommel 2 ist diese in diesem Schreibbereich für eine neue Aufzeichnung bereit.

In Figur 2 ist der durch einen Kreis 5' hervorgehobene Bereich der Schreibtrommel 2 stark vergrößert dargestellt Trifft ein Schreibstrahl 6 auf die Schreibtrommel 2, so wird an der Stelle 5 ein Rasterpunkt aufgezeichnet. Durch die Auslenkung des Schreibstrahles 6 senkrecht zur Zeichenebene wird an dieser Stelle die über die ganze Aufzeichnungsbreite reichende Rasterzeile aufgezeichnet. Danach wird der Schreibstrahl 6 in die Ausgangslage zurückgeführt, und eine neue Rasterzeile kann aufgezeichnet werden. Je dichter dabei die Rasterzeilen aufeinander liegen, desto besser ist das aufzuzeichnende Schriftbild der Schreibzeile.

Geht man davon aus, daß sowohl in der eingestellten Zeilenfrequenz des Schreibstrahles 6 als auch in dem Gleichlauf der Schreibtrommel 2 keinerlei zeitliche Schwankungen auftreten, so wird jede nachfolgende Rasterzeile 5.1, 5.2 und so fort im Bereich 5 der Schreibtrommel belichtet werden. Dies ist theoretisch möglich, aber kaum praktisch durchführbar da mit großer Wahrscheinlichkeit zumindest im Gleichlauf der Schreibtrommel 2 Schwankungen auftreten, so daß bezogen auf die Zeilenfrequenz des Schreibstrahles 6 die nachfolgenden Rasterzeilen 5.1, 5.2 und so fort nur zufällig genau im Bereich der Rasterzeile 5 aufgezeichnet werden, wahrscheinlich aber etwas davor oder danach. Diese Gleichlaufschwankungen der Trommel 2 können sich über die gesamte Papierlänge akkumulieren, so daß Fehler in der Placierung der Rasterzeilen auftreten können.

Mit der in Figur 3 dargestellten prinzipmäßigen Schaltungsanordnung können diese Gleichlaufschwankungen und etwaige Drehzahlabweichungen weitgehend unwirksam gemacht werden. Dabei wird weder die normale Zeilenfrequenz an sich noch die bestehende Vortriebsgeschwindigkeit der Schreibtrommel 2 bzw. des Aufzeichungsträgers allgemein geändert. Um dies zu erreichen, wird der Schreibstrahl 6 nach jeder Aufzeichnung einer Rasterzeile 5 zusätzlich zur horizontalen Auslenkung auch noch um einen Bruchteil des Rasterzeilenabstandes vertikal ausgelenkt. Gegenüber dem Rasterzeilenabstand a ist dieser Auslenkbetrag $\Delta$ a sehr klein. Die einzelnen Beträge $\Delta$ a.1 bis $\Delta$ a.n werden aufsummiert und nach jeder einzelnen Summenbildung mit dem vorbestimmten Rasterzeilenabstand a verglichen. Wird dann zu irgendeinem Zeitpunkt der Wert a erreicht, dann wird die danach aufzuzeichnende Rasterzeile unterdrückt und um den Betrag einer Rasterzeilenperiode verzögert aufgezeichnet. In dieser Zeit legt der Aufzeichnungsträger den Weg a - $\Delta$ a zurück, so daß die Aufzeichnung der bisher unterdrückten Rasterzeile wieder im Bereich 5 erfolgt. Damit können sich Gleichlaufschwankungen in der Bewegung der Schreibtrommel nur noch innerhalb des Rasterzeilenabstandes a auswirken.

Da der Rasterzeilenabstand a sehr klein ist, werden die auftretenden Gleichlaufschwankungen nicht mehr wahrgenommen. Wählt man eine übliche Auflösung von 300 Rasterzeilen pro Zoll, so ergibt sich ein Rasterzeilenabstand a von 0,08467 mm.

Von der Schlitzlochscheibe und der Lichtschranke werden Impulse erzeugt, deren Frequenz $F_A$ ein Vielfaches der Frequenz der Rasterzeilen bzw. der Triggerimpulse $F_H$ der Horizontalablenkung des Schreibstrahles beträgt. Bei einer gewählten Impulszahl von n = 8 ergibt sich für den Rasterzeilenabstand: a = 8 x a. Diese Impulsfolge $F_A$ wird über den Eingang B einem Dualzähler DZ mit einem Binärkode 1,2,4 zugeführt. In diesem Dualzähler DZ wird das Signal $F_T$ erzeugt. Weiterhin sind die Ausgänge des Dualzählers DZ mit einem Speicher SP verbunden, der mit der Negativflanke der Triggerimpulse $F_A$ geschaltet wird. Der Inhalt dieses Speichers SP bewirkt dadurch über den Digital-Analog-Wandler DA und den Vertikalverstärker V die Vertikalablenkung des Schreibstrahls 6 um den Betrag $\Delta$ a. Hierzu ist der Vertikalverstärker V mit der Ablenkspule 8 der Elektronenstrahlröhre 1 verbunden.

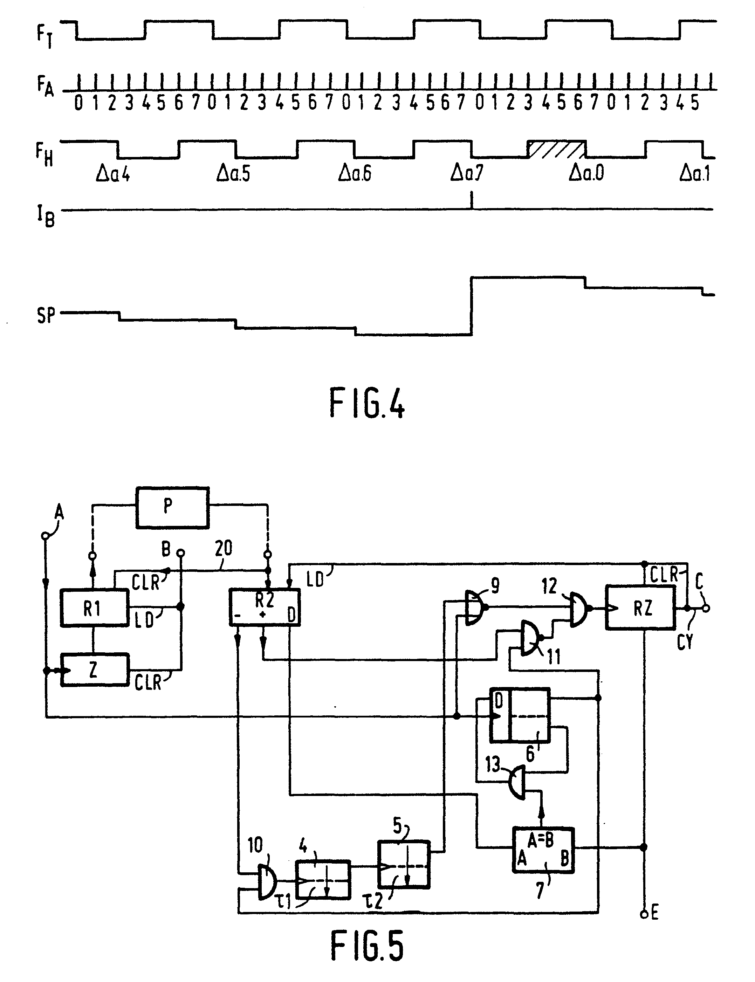

Sowohl das Signal $F_T$ des Dualzählers DZ als auch die Triggerimpulse $F_H$ werden einem Phasenvergleicher PV zugeführt, der nur bei den negativen Flanken beider Impulse $F_T$ und $F_H$ schaltet. Wie aus dem Diagramm der Figur 4 hervorgeht, ist die Impulsbreite der Triggerimpulse $F_H$ etwas kleiner als die der Signale $F_T$, so daß die Triggerimpulse $F_H$ den Signalen $F_T$ einmal voreilen und einmal nacheilen. Dabei wird immer dann, wenn sich die negativen Flanken der Triggerimpulse $F_H$ und der Signale $F_T$ überschneiden, d. h. wenn das Nacheilen in ein Voreilen übergeht, ein Impuls $I_B$ an den Rasterzeilenspeicher RS abgegeben. Im vorliegenden Beispiel ist dies nach der vertikalen Auslenkung $\Delta$ a7 der Fall. Dieser Impuls veranlasst, daß der Schreibstrahl 6 bei der nachfolgenden Rasterzeile ausgeblendet wird, so daß zwar eine horizontale Ablenkung, aber keine Aufzeichnung erfolgt. Diese Ausblendung ist im Diagramm der Triggerimpulse $F_H$ schraffiert gezeichnet. Die Aufzeichnung des Inhaltes dieser unterdrückten Rasterzeile erfolgt dann erst bei der nachfolgenden Rasterzeile.

In der Figur 4 ist in dem unteren Diagramm die Spannung am Ausgang des Digital-Analog-Wandlers DA dargestellt. Da die Diagramme der Figur 4 sehr stark vergrößert sind, ist nur der Bereich um eine Ablenkung einer Rasterzeile dargestellt. Weiterhin werden sich Gleichlaufschwankungen der Schreibtrommel 2 in den Impulsfolgen $F_T$ und $F_A$ dergestalt bemerkbar machen, daß die Impulsbreiten unterschiedlich sein können.

In Figur 5 ist eine weitere Schaltungsanordnung im prinzipiellen Aufbau dargestellt, mit der Gleichlaufschwankungen im Vortrieb der Schreibtrommel 2 unwirksam gemacht werden können. Dabei wird davon ausgegangen, daß Kurzlaufschwankungen an sich nicht wahrgenommen werden, d. h. Gleichlaufschwankungen, die sich nach kurzer Zeit von selbst wieder ausgleichen. Als kurze Zeit wird dabei die Zeit angesehen, in der die Schreibtrommel 2 eine Wegstrecke von einigen Schreibzeilen zurückgelegt.

Zur Bestimmung der tatsächlichen Vortriebsgeschwindigkeit eines Aufzeichnungsträgers, z. B. der Schreibtrommel 2, wird in nicht näher dargestellter, aber bekannter Weise, z. B. durch eine auf der Antriebsachse 8 aufgebrachten geschlitzten Scheibe, die von einer Lichtschranke abgetastet wird, eine Impulsfolge erzeugt. Der zeitliche Abstand zwischen den einzelnen Impulsen dieser Impulsfolge ist ein Maß für die tatsächliche Vortriebsgeschwindigkeit der Schreibtrommel 2. Der mittlere Abstand zweier aufeinanderfolgender Impulse wird so gewählt, daß er einer Vortriebsstrecke von 30 bis 100 mm entspricht. Dadurch wird erreicht, daß Kurzzeitschwankungen im Trommelvortrieb die Messung der mittleren Vortriebsgeschwindigkeit nicht verfälschen.

Die von der Vortriebsgeschwindigkeit der Schreibtrommel 2 abgeleitete Impulsfolge wird über die Klemme B einem Register R1 und einem Zähler Z zugeführt. Jeder Impuls dieser Impulsfolge setzt den Zähler jeweils in seine Ausgangslage zurück, während er das Register R1 aufnahmebereit macht. Die Triggerimpulse A für die Aufzeichnung der Rasterzeilen durch den Schreibstrahl werden ebenfalls dem Zähler Z zugeführt. Diese Triggerimpulse A sind derart, daß jede Rasterzeile entsprechend dem gewählten Beispiel vorzugsweise zweimal angesteuert wird. Jede Rasterzeile wird somit doppelt aufgezeichnet. Durch den Zähler Z werden die Triggerimpulse A gezählt, die während des tatsächlichen zeitlichen Abstandes zwischen zwei Impulsen der von der Schlitzscheibe abgeleiteten Impulsfolge dem Zähler Z zugeführt werden, d. h. es wird der zeitliche Abstand der Impulsfolge durch Zählung der während dieser Zeit aufgezeichneten Rasterzeilen gemessen. Das jeweilige Ergebnis wird über das Register R1 in einen Prozessor P des Mosaikdruckers zur weiteren Verarbeitung übernommen.

Die Übernahme des Registerinhaltes hängt dabei von mehreren Parametern ab. So soll eine Übernahme bzw. eine Korrektur nicht innerhalb einer Rasterzeile erfolgen. Auch darf bei besonderen Zeichen, z. B. Symbolen oder Firmenzeichen, eine Korrektur nicht innerhalb einer oder gegebenenfalls mehrerer Schreibzeilen durchgeführt werden.

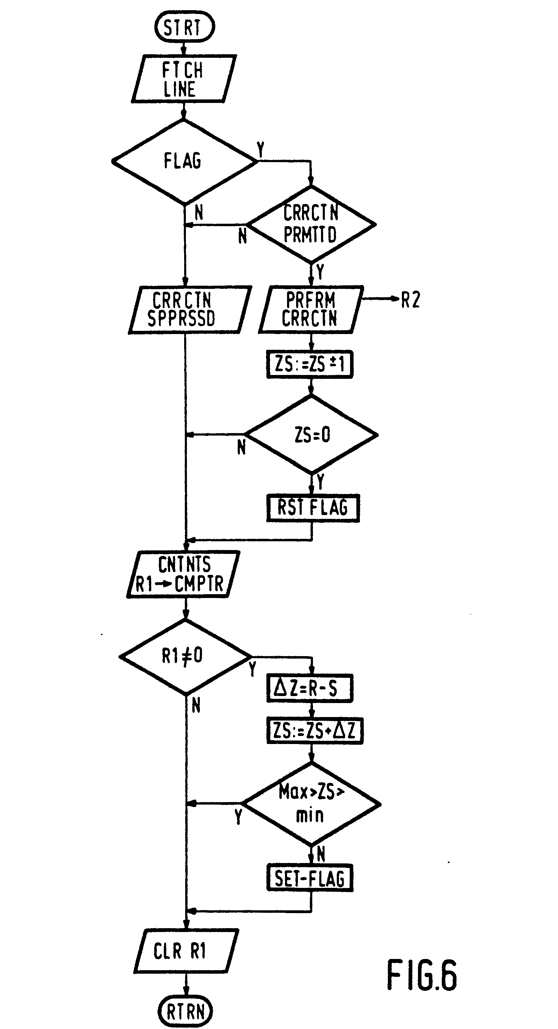

Zur Erläuterung dieser Vorgänge sei auf das in Figur 6 dargestellte Flußdiagramm hingewiesen, das ein Programm zur übergabe einer Schreibzeile und zur Korrektur der Gleichlaufschwankungen zeigt. Nach dem Startimpuls, der nach der Aufzeichnung einer Schreibzeile vom Ausgang C der Schaltung nach Figur 5 abgegeben wird, werden in bekannter, nicht näher dargestellter Weise die Informationsinhalte der Rasterzeilen einer Schreibzeile aufgezeichnet. Danach wird der logische Zustand eines Flag abgefragt. Hieraus wird bestimmt, ob eine Korrektur in der Schreibzeile vorgenommen werden soll oder nicht. Ist das Flag gesetzt, d. h. erscheint eine Korrektur angebracht, so ist weiterhin zu prüfen, ob eine Korrektur in der Schreibzeile erlaubt ist oder nicht. Diese Entscheidung kann vor dem Druckvorgang in einem anderen, hier nicht dargestellten Unterprogramm getroffen werden. Sie ist von der Manipulationsmöglichkeit einer Rasterzeile für alle in der betreffenden Schreibzeile vorkommenden Zeichen abhängig. Die Rasterzeilen-Korrekturadresse D einer Schreibzeile ist damit schon vor dem Druckvorgang berechnet und in einem bestimmten Speicherbereich abgelegt worden. So dürfen z. B. bei der Aufzeichnung von Kurven oder anderen Graphiksymbolen keine Korrekturen in den Schreibzeilen durchgeführt werden, in denen diese Zeichen oder Teile dieser Zeichen aufgezeichnet werden sollen.

Ist eine Korrektur in einer Schreibzeile erlaubt, dann werden die ermittelten Korrektursignale (Rasterzeilen-Korrekturadresse D und negatives (-) oder positives (+) Signal) dem Register R2 der Schaltung nach Figur 5 zugeführt. Ist dagegen das Flag nicht gesetzt oder darf in der zu druckenden Schreibzeile keine Korrektur durchgeführt werden, so werden die Korrektursignale unterbunden.

Der logische Zustand des positiven bzw. negativen Signales (langsame bzw. schnelle Vortriebsgeschwindigkeit der Schreibtrommel) wird vom Vorzeichen des Zwischenspeichers ZS bestimmt. Der Zwischenspeicher ZS enthält die Anzahl der innerhalb zweier aufeinanderfolgender Impulse noch zu korrigierenden Schreibzeilen, d. h. zweier Impulse der von der Vortriebsgeschwindigkeit der Schreibtrommel abgeleiteten Impulsfolge, die der Klemme B der Schaltung in Figur 5 zugeführt werden. Das Vorzeichen dieses Wertes bestimmt, ob in der Schreibzeile eine Rasterzeile hinzugefügt ($ZS \leq 0$) oder ob eine Rasterzeile übersprungen wird ($ZS \geq 0$). Ist dagegen ZS = 0, so sind alle notwendigen Korrekturen durchgeführt worden bzw. eine Korrektur ist nicht notwendig. Das Flag wird zurückgesetzt.

Nach dieser Zwischenentscheidung wird bei jedem Programmdurchlauf, der zu Beginn der Aufzeichnung jeder Schreibzeile durchgeführt wird, der Inhalt des Registers R1 in den Rechner eingelesen und geprüft. Ist dieser Registerinhalt ungleich 0, so zeigt dies an, daß in dem Zähler Z ein Meßzyklus beendet ist. Im Prozessor P wird in diesem Falle die Differenz zwischen dem gemessenen Wert R (Ist-Wert) und einem vorbestimmten Zählerwert S (Soll-Wert) ermittelt und das Ergebnis $\Delta$ Z zu dem im Zwischenspeicher ZS bereits aus vorhergehenden Messungen bestehenden Wert addiert. Auf diese Weise werden die zu diesem Zeitpunkt noch nicht durchgeführten Korrekturen mit berücksichtigt. In der nachfolgenden logischen Entscheidung wird festgestellt, ob der im Zwischenspeicher ZS enthaltene Wert innerhalb vorgegebener Toleranzen liegt oder nicht. Überschreitet der Wert die erlaubten Grenzwerte, zwischen denen noch keine Korrektur erforderlich bzw. wünschenswert ist, so erhält das Flag ein Setzsignal. Dadurch werden beim nächsten Programmdurchl auf, d. h. bei der Aufzeichnung der nächsten Schreibzeile, die im ersten Teil des Flußdiagrammes dargestellten Entscheidungen durchgeführt. Diese Entscheidungen werden dagegen übersprungen, wenn der im Zwischenspeicher ZS enthaltene Wert innerhalb der vorgegebenen Toleranzwerte liegt. Gleichzeitig wird mit Beendigung dieses Programmes das Register R1 über die Leitung 20 gelöscht. Es behält den Wert 0 bis zur Übernahme des nächsten Meßergebnisses durch den nächsten Impuls der Impulsfolge B.

War nach Durchführung des beschriebenen Programmes das Flag gesetzt, so ist einer der Ausgänge (-), (+) leitend geschaltet. Der betreffende Ausgang wird wirksam, wenn vom Ausgang C die nächste Schreibzeile markiert ist. Der Rasterzeilenzähler RZ erzeugt während des Druckvorganges einer Schreibzeile nacheinander die betreffenden Rasterzeilenadressen E des nicht dargestellten Zeichenspeichers. Diese Adresse wird vom Digitalkomparator 7 mit der Korrekturadresse D des Registers R2 verglichen. Solange dabei die Eingänge A und B ungleich sind, ist eine Korrektur der Schreibzeile nicht möglich. Die Triggerimpulse A können ungehindert über das invertierende Gatter 9 und das NAND-Gatter 12 zum Rasterzeilenzähler RZ gelangen. Ist die zu korrigierende Rasterzeile beim Drucken erreicht, d. h. sind die logischen Zustände an den Eingängen A und B gleich, so wird der Ausgang A = B des Komparators 7 leitend. Das dadurch erzeugte Signal wird über das Gatter 13 dem D-Eingang des Flip-Flops 6 zugeleitet und dann mit der negativen Flanke des Rasterzeilen-Triggersignales A in dieses Flip-Flop 6 übernommen. Eine Korrektur der Schreibzeile ist jetzt über die Gatter 10 oder 11 möglich.

War im letzten Meßzyklus des Zählers Z der Ausgang (+) des Registers R2 leitend, d. h. war die Vortriebsgeschwindigkeit der Schreibtrommel 2 zu langsam, so erfolgt eine Wiederholung der aufgezeichneten Rasterzeile durch Sperren der Übertragung des nächsten Rasterzeilen-Triggersignales A über das Gatter 11 auf den Rasterzeilenzähler RZ. Das Gatter 11 ist nicht durchlässig, da beide Eingänge leitend sind und der Ausgang invertiert ist. Dadurch ist auch das NAND-Gatter 12 gesperrt, so daß dieser Triggerimpuls A nur einen Eingang über das Gatter 9 leitend macht. Im Rasterzeilenzähler RZ wird dadurch eine Weiterschaltung verhindert und dieselbe Information der Rasterzeile nochmals aufgezeichnet. Das folgende Triggersignal A setzt den D-Eingang des Flip-Flops 6 mit der negativen Flanke wieder zurück, und die folgenden Rasterzeilen werden normal ausgegeben.

Wurde dagegen im letzten Meßzyklus des Zählers Z der Ausgang (-) des Registers R2 leitend, d. h. die Vortriebsgeschwindigkeit der Schreibtrommel 2 war zu schnell, so wird über das UND-Gatter 10 durch die Mono-Flops 4 und 5 ein zusätzliches Rasterzeilen-Triggersignal $\tau$ erzeugt, wobei mit dem vom Mono-Flop 4 erzeugten Impuls $\tau2$ eine Verzögerung erreicht wird. Dieses zusätzliche Triggersignal $\tau2$ schaltet zusätzlich zur vorderen Impulsflanke des Triggersignales A über die Gatter 9 und 12 den Rasterzeilenzähler RZ noch einmal weiter. Dadurch erfolgt ein Überspringen der nächsten Rasterzeile.

Wurde keiner der beiden Ausgänge (+), (-) des Registers R2 leitend, d. h. die Vortriebsgeschwindigkeit der Schreibtrommel 2 liegt innerhalb der Toleranzgruppe, so erfolgt keine Beeinflussung des Rasterzeilenzählers RZ. Er wird dann normal über die Gatter 9 und 12 von den Triggersignalen A angesteuert.

## Patentansprüche

1. Verfahren zur Kompensation von durch Gleichlaufschwankungen des Vortriebs eines Aufzeichnungsträgers verursachten Ungleichmäßigkeiten der Zeilenabstände bei nichtmechanischen Matrixdruckern, insbesondere bei elektrophotographischen Druckern, bei denen eine Schreibzeile durch eine Mehrzahl von nacheinander in bestimmten Rasterzeilenabständen mit konstanter Rasterzeilenfrequenz mittels eines horizontal abgelenkten Schreibstrahls aufgezeichnete Rasterzeilen gebildet wird, wobei aus dem Unterschied zwischen der Vortriebsgeschwindigkeit (Ist-Wert) des Aufzeichnungsträgers und dessen vorbestimmter Vortriebsgeschwindigkeit (Soll-Wert) eine Regelgröße gewonnen wird und beim Erreichen einer Regelgröße, welche etwa der negativen oder positiven Abweichung um einen Rasterzeilenabstand entspricht, eine zusätzliche informationslose Rasterzeile veranlaßt wird, dadurch gekennzeichnet, daß der Schreibstrahl nach der Aufzeichnung einer Rasterzeile auch vertikal um einen Korrekturwert ausgelenkt wird und daß, wenn die Summe dieser vertikalen Korrektur-Auslenkungen den Wert des Rasterzeilenabstands erreicht, die Aufzeichnung der nachfolgenden Rasterzeile um eine Ablenkperiode des Schreibstrahls ausgesetzt und die vertikale Auslenkung des Schreibstrahls auf den Ausgangspunkt zurückgesetzt wird.

2. Verfahren nach Anspruch 1, dadurch gekennzeichnet, daß von der Umdrehungsgeschwindigkeit des Aufzeinungsträgers (2) eine Impulsfolge ($F_A$) abgeleitet und einem Dualzähler (DZ) zugeführt wird, daß aus dieser Impulsfolge ($F_A$) eine weitere Impulsfolge ($F_T$) erzeugt wird, deren Impulsbreite jeweils größer ist als die Impulsbreite der die Rasterzeilenfrequenz bestimmenden Rasterzeilen-Triggerimpulse ($F_H$), und daß sowohl die weitere Impulsfolge ($F_T$) als auch die Rasterzeilen-Triggerimpulse ($F_H$) einem Phasenvergleicher (PV) zugeführt werden, welcher beim Wechsel des Vorzeichens der Phasendifferenz der zugeführten Signale ($F_T$ und $F_H$) einen Impuls ($I_B$) bildet, durch welchen die Aufzeichnung einer Rasterzeile durch den Schreibstrahl (6) um eine Rasterzeile verzögert wird.

## Claims

1. A method of compensating irregularities in the spacing of the lines in non-mechanical matrix printers which are caused by synchronism fluctuations in the record carrier drive, notably in electrophotographic printers where a line of print is formed by a plurality of picture lines which are successively recorded with a given picture line spacing and a constant picture line frequency by means of a horizontally deflected recording beam, a control value being derived from the difference between the transport speed (actual value) of the record carrier and its predetermined transport speed (reference value), an addititional, information-free picture line being initiated when a control value is reached which corresponds to a negative or positive deviation which amounts to approximately one picture line spacing, characterized in that after the recording of a picture line, the recording beam is also vertically deflected by a correction amount and in that, when the sum of these vertical correction amounts reaches the value of the picture line spacing, the recording of the next picture line is postponed by one deflection period of the recording beam, the vertical deflection of the recording beam, being reset to the starting point.

2. A method as claimed in Claim 1, characterized in that from the rotary speed of the record carrier (2) there is derived a pulse series ($F_A$) which is applied to a dual counter ($D_Z$), from said pulse series ($F_A$) there being derived a further pulse series ($F_T$) whose pulse width each time exceeds the pulse width of the picture line trigger pulses ($F_H$) which determine the picture line frequency, the further pulse series ($F_T$) as well as the picture line trigger pulses ($F_H$) being applied to a phase comperator ($P_V$) which forms, in reaction to the changing of the sign of the phase difference between the applied signals ($F_T$ and $F_H$), a pulse ($I_B$) which delays the recording of a picture line by the recording beam (6) by one picture line.

## Revendications

1. Procédé pour compenser des irrégularités des interlignes, dues à des fluctuations de la synchronisation de l'entraînement d'un support d'enregistrement dans des imprimantes matricielles non mécaniques, notamment des imprimantes électrophotographiques, dans lesquelles une ligne d'écriture est formée par une pluralité de lignes de trame enregistrées successivement à des interlignes de trame déterminés et à une fréquence de ligne de trame constante au moyen d'un faisceau d'écriture dévié horizontalement, procédé consistant à déterminer une valeur de réglage à partir de la différence entre la vitesse d'entraînement (valeur effective) du support d'enregistrement et sa vitesse d'entraînement prédéterminée (valeur de consigne) et à engendrer une ligne de trame supplémentaire sans information lors de l'obtention d'une valeur de réglage correspondant à peu près à l'écart négatif ou positif égal à un interligne de trame, caractérisé en ce que le faisceau d'écriture est également dévié verticalement à raison d'une valeur de correction et en ce que, lorsque la somme de ces déviations verticales de correction atteint la valeur de l'interligne de trame, l'enregistrement de la ligne de trame suivante est retardé d'une période de déviation du faisceau d'écriture et la déviation verticale du faisceau d'écriture est remise à la valeur de départ.

2. Procédé selon la revendication 1, caractérisé en ce qu'un train d'impulsions ($F_A$) est déduit de la vitesse de rotation du support d'enregistrement (2) et est appliqué à un compteur binaire (DZ), en ce qu'à partir de ce train d'impulsions ($F_A$), est engendré un autre train d'impulsions ($F_T$) dont la largeur d'impulsion est supérieure à la largeur des impulsions de déclenchement de ligne de trame ($F_H$) déterminant la fréquence de ligne de trame, et en ce que l'autre train d'impulsions ($F_T$) aussi bien que les impulsions de déclenchement de ligne de trame ($F_H$) sont appliquées à un comparateur de phases (PV) qui, lors du changement du signe de la différence de phase des signaux appliqués ($F_T$ et $F_H$), forme une impulsion ($I_B$) retardant d'une ligne de trame l'enregistrement d'une ligne de trame par le faisceau d'écriture (6).

FIG.1

FIG.2

FIG.3

FIG.4

FIG.5

0 094 719

STRT

FTCH LINE

FLAG — Y → CRRCTN PRMTTD

FLAG — N → CRRCTN SPPRSSD

CRRCTN PRMTTD — N
CRRCTN PRMTTD — Y → PRFRM CRRCTN → R2

$ZS := ZS \pm 1$

$ZS = 0$ — N
$ZS = 0$ — Y → RST FLAG

CNTNTS R1 → CMPTR

$R1 \neq 0$ — N
$R1 \neq 0$ — Y → $\Delta Z = R - S$

$ZS := ZS + \Delta Z$

$Max > ZS > min$ — Y
$Max > ZS > min$ — N → SET-FLAG

CLR R1

RTRN

FIG.6